# EUROPEAN PATENT APPLICATION

(11) **EP 0 823 312 A1**
(43) Date of publication of application: **11.02.1998**
(21) Application number: 96112715.6
(22) Date of filing: 07.08.1996
(51) Int. Cl.: B25B 31/00, C09J 5/06, C09J 7/00, B29C 65/48

(54) **Hand-held device for adhering an object having a thermosettable layer, to a substrate**

(71) Applicant: MINNESOTA MINING AND MANUFACTURING COMPANY, St. Paul, Minnesota 55133-3427 (US)
(72) Inventor: Schöppel, Wolfgang, MI Mining and Manufact. Comp., St. Paul, Minnesota 55 144-1000 (US)
(74) Representative: Wilhelm, Stefan

(57) **Abstract**

The present invention relates to a hand-held device for adhering an object (5) having a thermosettable adhesive layer (6) to a substrate (7), said device comprising a contact heating assembly (1) with a contact means (17) which is adapted to allow for application of heat and pressure to the object (5) to effect curing of the thermosettable layer (6), a heating element (2) integrated into the contact heating assembly (1), a means (3) for measuring the temperature of the contact zone comprising the adhesive layer (6), the object (5) and the contact means (17), a means (8) for exerting pressure on the contact means (17), a control circuit (4) using the signal of the means (3) for measuring the temperature of the contact zone for controlling the power supplied to the heating element (2), whereby the contact heating assembly 1, the heating element (2), the means (3) for measuring the temperature of the contact zone and the control circuit (4) are selected and adjusted to each other to allow for an essentially constant average temperature of the thermosettable adhesive layer (6) during the curing interval. The present invention furthermore refers to a method for adhering an object comprising a thermosettable adhesive layer, to a substrate using said hand-held device. The invention furthermore refers to a method for removing said object from the surface by using said hand-held device without any permanent residue of the thermoset adhesive layer left on the substrate, and to a kit of parts comprising said hand-held device and said object.

## Description

### Field of the invention

The present invention refers to a hand-held device for adhering an object 5 having a thermosettable adhesive layer 6 to a substrate 7 and to a method for applying said object 5 to the substrate 7 by means of said device. The present invention furthermore refers to a method for removing an object being adhered to a substrate with a thermosettable adhesive, from the substrate.

### Background of the invention

Thermosettable adhesives often exhibit properties which render them difficult to apply with a hand-held device. The epoxy-acrylate blend pressure-sensitive thermosettable adhesives described in US 5,086,088, for example, typically have curing times of 20-30 minutes at a temperature of 140°C (see examples 41 and 48). The heat-activatable, pressure-sensitive adhesive tapes of US 4,199,646 are cured, for example, for 30 minutes at 180°C (see examples 1-21). US 5,464,693 describes a method for applying a mirror base on a glass plate using a film or sheet of thermosetting heat-curable adhesive. The curing time is 5-60 minutes at a curing temperature of 50-200°C.

Co-pending PCT patent application PCT/US 96/05,416 particularly describes a device for adhering mirror buttons to vehicle windshields. The device comprises a shell which is mainly placed over the button assembly and can be internally evacuated. The vacuum is sufficient to hold the device on the windshield and furthermore acts to remove air bubbles trapped between the tape and the windshield from the chamber and to force the heating platen against the button assembly. In an example, a curing temperature of 177°C was applied for 20 minutes.

The curing times reported in the above references were too long to conveniently allow application of the thermosettable adhesives with a hand-held device.

Hand-held devices have been developed for the application of other adhesives such as, for example, hot-melt adhesives. Such devices are described, for example, in EP 0,289,862. Polygun™ HT which is commercially available from Minnesota Mining and Manufacturing Company, St. Paul, Minnesota, U.S.A., uses a small screw conveyor to apply the hot melt.

Hot-melt adhesive layers with a thickness of up to several mm can be molten by applying a temperature of, for example, typically 100°C for typically 5-10 sec and the heating output of the device can be low.

While hot melt adhesives are molten prior to application and therefore require low heating energy only, thermosettable adhesives are cured during application. Curing is performed on the substrate which absorbs most of the heat. Therefore a distinctly higher heating power is required for thermosettable adhesives.

There was therefore a need for providing a hand-held device for adhering an object 5 having a thermosettable adhesive layer 6, to a substrate 7 exhibiting advantageous handling properties and, in particular, advantageous application times. Other objects of the present invention can be taken from the following detailed description.

### Brief description of the invention

The present invention refers to a hand-held device for adhering an object 5 having a thermosettable adhesive layer 6 to a substrate 7, said device comprising a contact heating assembly 1 with a contact means 17 which is adapted to allow for application of heat and pressure to the object 5 to effect curing of the thermosettable layer 6, a heating element 2 integrated into the contact heating assembly 1, a means 3 for measuring the temperature of the contact zone comprising the adhesive layer 6, the object 5 and the contact means 17, a means 8 for exerting pressure on contact means 17, a control circuit 4 using the signal of the means 3 for measuring the temperature of the contact zone for controlling the power supplied to the heating element 2, whereby the contact heating assembly 1, the heating element 2, the means 3 for measuring the temperature of the contact zone and the control circuit 4 are selected and adjusted to each other to allow for an essentially constant average working temperature of the thermosettable adhesive layer 6 during the curing interval. The curing temperature is selected to provide curing intervals of 5 minutes or less required for a hand-held device. The curing temperature preferably is between 160 and 330⁰C.

The present invention furthermore refers to a method for adhering an object 5 comprising a thermosettable adhesive layer 6 to a substrate using the hand-held device of the invention, for applying heat and pressure to the object 5 as to cure the thermosettable adhesive layer in a curing interval of 5 minutes or less at an essentially constant average temperature of the thermosettable adhesive layer 6 during the curing interval. The curing temperature which is selected to give the required curing interval of 5 minutes or less, preferably is between 160 and 330⁰C.

The present invention furthermore refers to an object 5 comprising a thermosettable adhesive layer 6 which can be applied to a surface 2 by means of the hand-held device of the invention wherein the thermosettable adhesive layer 6 exhibits a water-content of less than 0.3% by weight, and furthermore to a kit of parts comprising a hand-held device according to the invention, an object 5 and a thermosettable adhesive layer 6.

The present invention furthermore refers to a pressure-sensitive thermosettable adhesive having a water content of less than 0.1% by weight.

The present invention furthermore refers to a method of removing an object being adhered to a substrate with the thermoset adhesive, from the substrate by contacting the object with the hand-held device according to the invention with the contact means being held at an essentially constant average working temperature of typically between 150 and 300°C for a time sufficient to soften the thermosettable adhesive and then removing the object with a cleavage tool.

### Short description of the figures

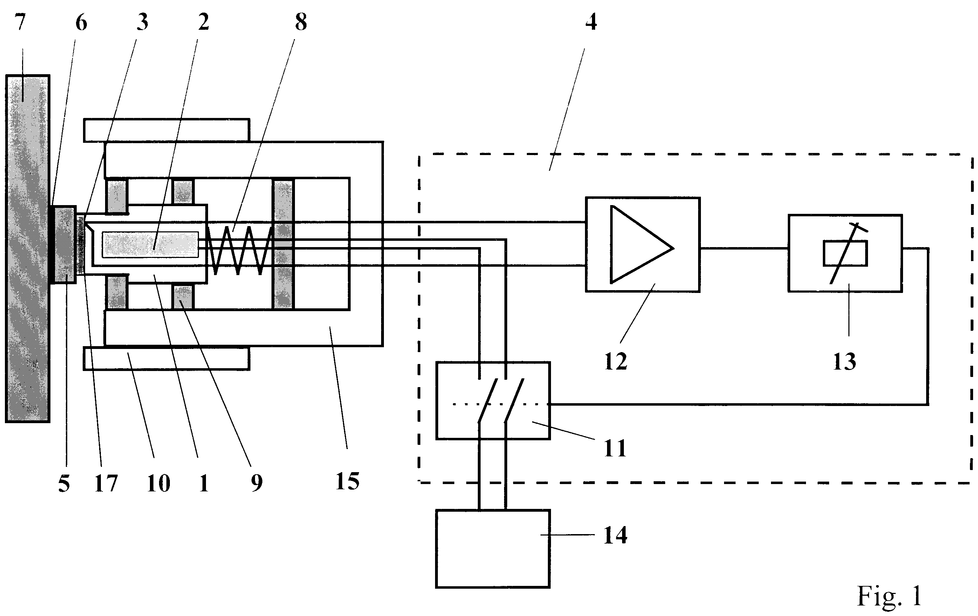

Fig. 1 shows a schematic representation of a preferred embodiment of a hand-held device according to the invention comprising contact heating assembly 1 with contact means 17, thermocouple 3 and heating element 2, and control circuit 4 with amplifier 12, temperature control 13 and relay 11. The contact heating assembly 1 is mounted in heat-resistant bearings 9 to housing 15 having a adjustable distance holders 10. The object 5 carrying a thermosettable adhesive layer 6 is placed on the substrate 7 and contacted with contact means 17 of contact heating assembly 1. During curing, contact means 17 is heated via power supply 14 and pressure is exerted on contact means 17 via spring 8.

Fig. 2 shows a perspective view of a specific embodiment of a hand-held device according to the invention. Fig. 3 shows an enlarged perspective view of contact heating assembly 1 of the embodiment of Fig. 2 with a hot bar plate 17 and adjustable distance holders 10.

Fig. 4 shows a perspective view of circularly shaped anchoring plates having a forwardly protruding nose 18 bearing the adhesive layer 6, a circular rim 19 and recess 20.

Fig. 5 shows temperature-time profiles recorded during curing of circular anchoring plates of Fig. 4 on a glass substrate (6 mm thick). 1 shows the temperature of hot bar plate 17 and 2 is the temperature of the thermosettable adhesive layer 6.

### Detailed description of the invention

Above and below, the term hand-held refers to a device which is easily manually manipulable and allows adhering of an object 5 bearing a thermosettable adhesive layer 6 to a substrate 7 with a curing time of 5 minutes or less, more preferably not more than 3 minutes and especially preferably not more than 2 minutes.

Above and below, the time interval starting when the contact zone comprising the thermosettable adhesive 6, the object 5 and the contact means 17 first reaches the preselected working temperature and ending when the power supply 14 of the hand-held device is turned off, is termed as curing interval or curing time. The preselected temperature corresponds to the average temperature or average working temperature of the contact zone in the curing interval. The average temperature of the thermosettable adhesive layer during the curing interval is also termed as curing temperature.

The curing method which is employed by the hand-held device of the present invention, relies on contact-heating. The contact heating assembly 1 is brought via contact means 17 into intimate contact with the object 5, thus effecting heat flow from the contact heating assembly 1 to the thermosettable adhesive layer 6.

To achieve high curing speeds and low curing times, a sufficiently high average working temperature of the contact zone and, in particular, of the thermosettable layer 6 has to be applied during the curing interval and essentially kept constant. If the temperature drops too much during the curing cycle, the curing times are increased and eventually become intolerable for a hand-held device. If the temperature exceeds a point where the curing of the adhesive is unfavourable influenced, and/or the decomposition temperature, the adhesive will be irreversibly damaged.

The average working temperature of the contact zone can be the average working temperature of the thermosettable adhesive layer 6, of the object 5, of the contact means 17 or of any interface between these. The difference between the average temperature of the contact means 17 and the thermosettable adhesive layer 6 depends, for example, on the specific geometrical set-up, the heat-conductivity of the thermosettable adhesive layer 6, the object 5 and contact means 17 and the pressure applied during curing, and typically amounts up to 50°C.

It was found that in order to obtain sufficiently low curing times to comply with the requirements of a hand-held device, the average working temperature of the thermosettable adhesive layer 6 during the curing interval has to be sufficiently high and preferably is between 160 and 330°C. The curing temperature of the thermosettable adhesive layer is more preferably between 180 and 280°C and especially preferably between 200 and 280°C.

The average temperature of the thermosettable adhesive layer 6 is influenced by the thermal conductivity and heat capacity of the contact heating assembly 1, the contact means 17, the object 5, the substrate 7 and the thermosettable adhesive layer 6 and by the heating output of heating element 2.

The front part of the contact heating assembly 1 which is termed as contact means 17 is formed to allow close contact to object 5 in order to promote heat transfer. The contact means 17 and the other part of the contact heating assembly 1 can be of the same or of different materials. Preferably they are of the same materials. The thermal conductivity of contact means 17 is preferably equal or higher than the thermal conductivity of the other part 5 of the contact heating assembly 1. Contact means 17 and the other part 5 of contact heating assembly 1 can be separated parts which are assembled, for example, screwed together or they can form one part.

The mass of the contact heating assembly 1 is limited in order to render the device easily manually manipulable. The mass of the contact heating assembly 1 including the mass of the heating element 2 integrated therein is preferably less than 300 g, more preferably less than 100 g and especially preferably less than 50 g. The ratio of the mass of the contact heating assembly 1 and the mass of the object 5 is preferably at least 5 and more preferably at least 10.

The contact heating assembly 1 and the contact means 17 preferably comprise materials with a high thermal conductivity such as stainless steel, copper or aluminum. Especially preferred is stainless steel or aluminum.

Since the mass of the contact heating assembly 1 is limited due to the requirement of easy manual manipulability, the power output of the heating element 2 preferably is high to allow for quick compensation of heat flow into substrate 7. The power density of the heating element 2 with respect to the volume of the contact heating assembly 1 preferably is between 4-30 W/cm³ and more preferably between 10 - 20 W/cm³. The heating element 2 preferably relies on electrical resistance heating. Such heating elements are commercially available as, for example, cartridge heaters by Watlow Electric Mfg. Co. 12001 Lackland Road, St. Louis, Missouri 63146.

The heating output of the heating element 2 is controlled by control circuit 4 which uses the signal of a means 3 for measuring the temperature of the contact zone to control the power supplied from power supply 14 to the heating element.

The temperature of the contact zone can be the temperature of the thermosettable adhesive layer 6, the object 5 or the contact means 17 or of any interface between these layers. Any of these temperatures can be measured and used to control the heating supply of the hand-held device according to the invention. It is often advantageous to measure the temperature of the interface of contact heating assembly 1 and contact means 17, or the temperature of the contact means 17. In this case, the temperature of the contact heating assembly 1 and contact means 17 have to be selected so as to provide the required curing temperature in the thermosettable adhesive layer 6.

The means 3 for measuring the temperature of the contact zone can be sleeted from a group of temperature sensors comprising, for example, NTC, PTC, Metal-PTC (Pt 100), transistor, quartz or thermocouple temperature sensors and bimetal switches. It is also possible, for example, to use the contact means 17 simultaneously as means for measuring the temperature by monitoring its resistance as a function of temperature.

It is essential for the device of the present invention that the average working temperature of the contact zone is kept essentially constant during the curing interval. The temperature of the contact zone during the curing interval deviates from its average working temperature preferably by not more than ± 20°C, preferably by not more than ± 15°C and more preferably by not more than ± 10°C.

Because of the requirement of an essentially constant average working temperature of the contact zone , the means 3 for measuring its temperature preferably is a medium or high speed sensor. The means 3 for measuring the temperature preferably is selected from the group of temperature sensors comprising NTC, PTC, Metal-PTC (Pt 100) and thermocouple temperature sensors. Especially preferred are thermocouple temperature sensors like, for example, Ni-Cr/Ni-Al.(Type K) thermocouples. The thermocouple is especially preferably located closely to the interface of contact heating assembly 1 and contact means 17 or incorporated into contact means 17 so that the temperature signal recorded reflects the temperature of the thermosettable adhesive layer 6 as closely as possible. The distance between the surface of contact means 17 and the temperature sensor preferably is less than 5 mm and more preferably less than 2 mm.

The signal of the means 3 for measuring the temperature of the contact zone is used as the input signal for control circuit 4.

Control circuit 4 can exhibit different degrees of complexity.

In one embodiment a bimetal switch is used which works both as temperature sensor 3 and as control circuit 4. In this case no electronic circuit 4 is required to control the power provided from power supply 14 to heating element 2.

A more sophisticated design of control circuit 4 is schematically shown in Fig. 1. The signal of the means 3 for measuring the temperature of the contact zone 17 is first amplified in an amplifier. The signal of amplifier 12 is converted in temperature control unit 13 in a signal fed into power supply control unit 11.

The temperature control unit 13 can be, for example, a potentiometer, or a more sophisticated circuit. The power supply control unit 11 can be a discontinuous controlling means like, for example, a relay switching the power supply 14 on and off. It is, however, also possible to use power supply control units 11 continuously adjusting the output of power supply 14 such as Thyristor or Triac controlled devices. The power supply typically is the line voltage but a mobile power supply like, for example, a lead accumulator can also be used.

The amplifier 12 is selected to conform with the magnitude of the feed signal supplied by means 3 for measuring the temperature of the contact zone and with the range of control of temperature control unit 13. Fig. 1 is schematic only, and the control circuit 4 shown can comprise further elements. The amplifier 12 is needed in order to convert the sensor signal into a signal which is stable, independant from ambient temperatures and has the right signal level for the subsequent signal processing in temperature control unit 13.

The two specific embodiments of the control circuit 4 illustrate the invention only without limiting it. The control circuit 4 can comprise other and/or further elements than those shown in Fig. 1. Taking into account the above description, the person skilled in the art can easily modify and optimize control circuit 4 in view of a specific set-up of the contact heating assembly 1 and the means 3 for measuring its temperature, for example.

The contact heating assembly 1, the heating element 2, the means 3 for measuring the temperature of the contact zone and the control circuit 4 are preferably selected and adjusted to each other so that
(i) the temperature of the contact heating assembly 1 drops no more than 20% below its average working temperature when the object 5 is contacted with contact heating assembly 1 and transferred to the substrate, and subsequently rises to its average working temperature in less than 60 sec, and/or
(ii) the temperature of the contact zone during the curing interval deviates from its average working temperature by not more than ± 20°C.

According to condition (i) the object 5 reaches the average working temperature in the curing interval (= curing temperature) quickly. The temperature of the contact heating assembly 1 preferably rises to its average working temperature in less than 60 sec, more preferably less than 45 sec and especially preferably not more than 30 sec. Heating-up times of more than 60 sec are less preferred or even not acceptable in view of the requirements of a hand-held application device.

According to condition (ii), the temperature of the contact zone is essentially constant during the curing interval.

In a preferred embodiment these conditions are realized
(i) by using a medium or high speed temperature sensor, in particular a thermocouple
(ii) which preferably is located close to the surface of the contact means 17, and
(iii) by adjusting the volume of the contact heating assembly 1 and the heating power of heating element 2 to give a high heating power density.

In this preferred embodiment, temperature-time reply of the hand-held device is essentially determined by these factors (i) - (iii) whereas the specific circuiting of the control circuit 4 was found to be less decisive.

The object 5 has a front face bearing the thermosettable adhesive layer 6 and rear face 6 which is adjusted to the front face of the contact means 17 to allow close contact between these surfaces and thus easy and rapid heat transfer from the contact means 17 to the object 5.

The object 5 preferably comprises a material of high thermal conductivity such as aluminum, steel, iron, brass, copper, zinc or other metals. The ratio of the mass of the object 5 to the mass of the contact heating assembly 1 is preferably not more than 0.5 more preferably less than 0.2 and especially preferably less than 0.1.

The object 5 is preferably an anchoring device; more preferably, the rear surface of object comprises engagement means to engage a cooperative feature of a holder.

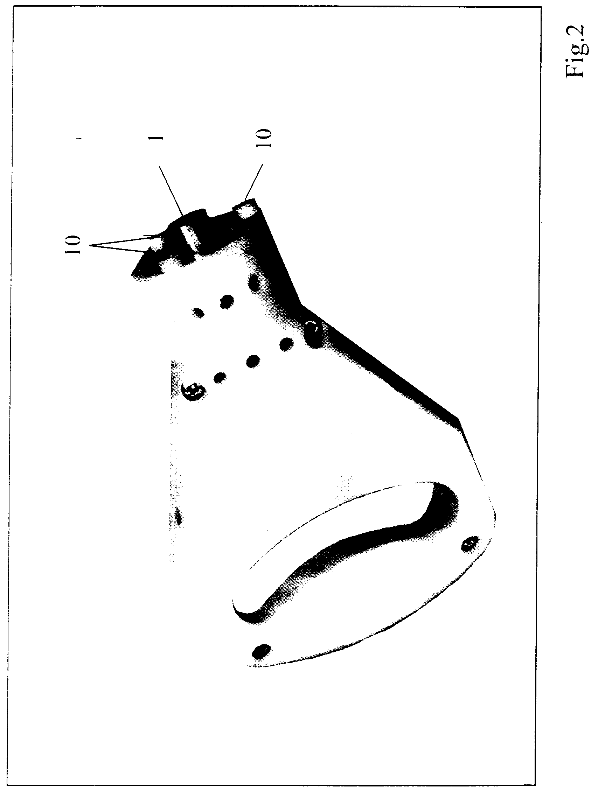

An example of an anchoring device which is designed to releasably engage the rear mirror of a car, is described in co-pending PCT patent application PCT/US 96/05,416 (see, in particular, Fig. 1 and 2). This anchoring device is commercially available under the trademark GM # 5-3823 from SSI Technology, Inc., of Janesville, Wisconsin. Other commercially available mirror buttons include the following non-exclusive list S-3756, S-3832, S-3823 and S-2525, all available from SSI Technology, Inc., of Janesville, Wisconsin.

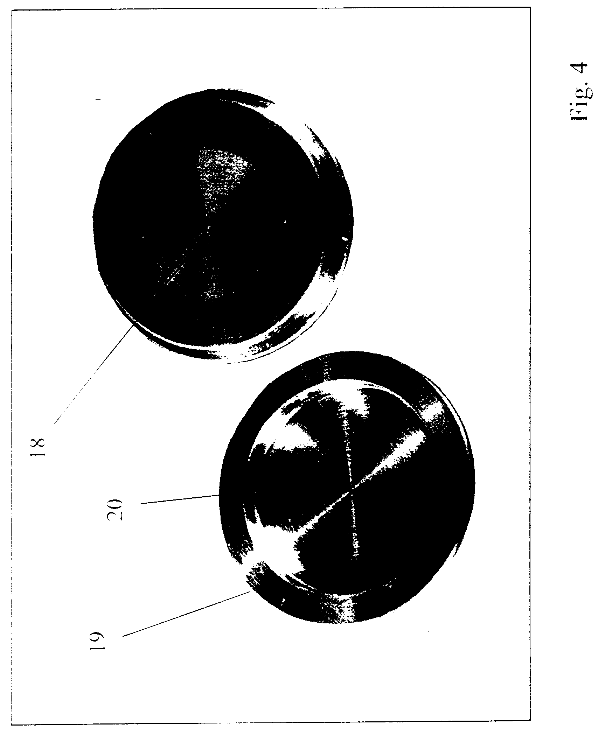

Another example of an anchoring device suitable for the present invention, is shown in Fig. 4. This anchoring device has a forwardly protruding nose 18 forming the front surface which carries the thermosettable adhesive layer 6, and a rear surface comprising a recess 20 surrounded by a circular rim 19 which forms a base for removably supporting hooks or the like. This anchoring device geometry was also used in EP 0,289,962.

The anchoring devices shown in Fig. 4 and described in co-pending PCT/US 96/05,416 are merely illustrative and it will be recognized that numerous other designs can be used.

The object 5 and, more specifically, the anchoring device preferably comprise at least one partially flat surface part on the front surface which bears the thermosettable adhesive layer 6, and at least one partially flat surface part on the rear surface to facilitate contact and heat transfer between the contact heating assembly 1 and the object 5. The presence of flat surface parts is preferred but not required.

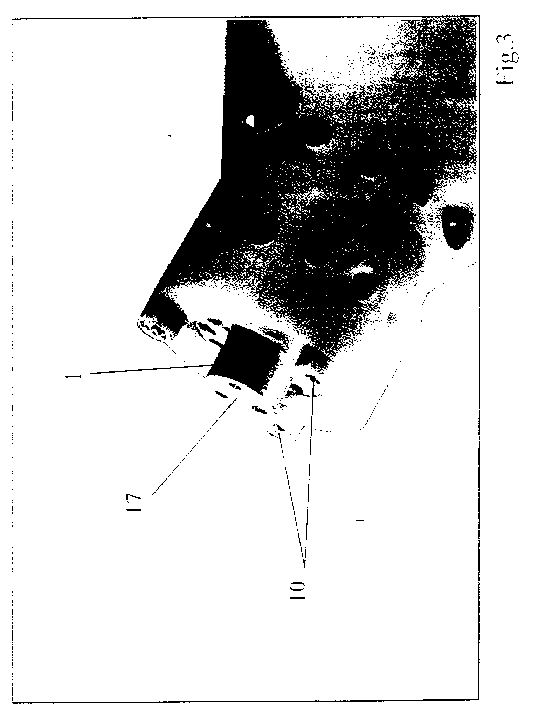

In case of the anchoring device Fig. 4, for example, the contact means 17 of the device according to the invention is preferably designed to fit snugly into the recess 20 on the rear side of the anchoring device and forms a hot bar plate 17 (see Fig. 3). The rear surface of the device and the front surface of the contact heating assembly 1 are preferably polished to facilitate heat transfer.

The person skilled in the art can easily adapt the design of the front part of the contact means 17 to the numerous designs of object 5 and anchoring devices to allow for secure positioning of the object 5 on the substrate 7 during curing and for rapid heat transfer from the contact means 17 to object 5.

The front surface of the object bears a thermosettable adhesive layer 6 which can be applied, for example, as a suitability die-cut transfer tape. The thermosettable adhesive layer 6 can be pressure-sensitive (tacky) or non-pressure-sensitive (non-tacky) at room temperature. The thermosettable adhesive preferably is pressure-sensitive so that the object can be adhered and positioned on the surface 7 prior to thermocuring. When the thermosettable adhesive is pressure-sensitive or tacky at room temperature, the thermosettable adhesive layer 6 on the object is preferably protected by a release liner from dust and other contaminants prior to use.

Pressure-sensitive thermosettable adhesive tapes comprise a pressure-sensitive adhesive which can be cured, i.e. crosslinked after the tape has been applied. Curing can be effected thermally or via radical, cationic, anionic or condensation curing reactions. Pressure-sensitive thermosettable adhesive tapes comprise, for example, rubber-based heat-activatable adhesive tapes containing a mixture of a rubber such as neoprene rubber, nitrile rubber, styrene-butadiene rubber, or natural rubber with a suitable amount of a hydrogenated rosin, a phenolic resin, a polyterpenic resin, etc. and a resin-based heat-activatable adhesive which mainly comprises polyethylene, an ethylene/vinyl acetate co-polymer, a polyamide resin, etc.

Preferred are epoxy-acrylate blend thermosettable adhesive tapes which can be tacky or non-tacky. Systems of this type are described, for example, in US 4,612,209, EP 0,386,909, US 5,086,088 or WO 94/08,781. WO 94/08,781 describes a pressure-sensitive structural adhesive comprising a core layer of a partially cured thermosettable adhesive such as partially cured B-stage epoxy resin having on at least one surface thereof a separate continuous or discontinuous layer of a tacky pressure-sensitve adhesive.

Especially preferred are epoxy-acrylate blend pressure-sensitive thermosettable adhesive tapes.

Non-pressure-sensitive thermosettable adhesives which are useful in the present invention comprise, for example, epoxies, epoxy/ethylvinylacetate systems, nylon/epoxy systems which are commercially available, for example, as Scotch-Weld® AF 42 from 3M Comp., St. Paul, Minnesota, U.S.A.., polyurethanes described, for example, in D. Bamborough, Kleben & Dichten, Adhäsion 39 (1995), 25, or silicones such as SOTEFA commercially available from Dow Corning.

The pressure-sensitive and non-pressure-sensitive thermosettable adhesives described illustrate the invention only without limiting it.

The thickness of the adhesive tape is typically between 0.1 and 10 mm, more preferably between 0.2 and 3.0 mm and especially preferably between 0.2 and 1.0 mm. The extension of the adhesive tape into the other two directions depends mainly on the geometric dimensions of the object and the desired bonding strength and can easily be varied and adapted to a specific embodiment.

In case of a pressure-sensitive or tacky thermosettable adhesive layer 6, the object can be adhered to the surface prior to thermal curing and, especially in case the pressure-sensitive thermosettable adhesive layer 6 is removable, oriented and positioned on the surface. The contact heating assembly 1 of the hand-held device which has been heated to its average working temperature previously, is then contacted with the rear surface of the object to effect thermal curing.

If the thermosettable adhesive layer 6 is non pressure-sensitive or non-tacky, the object 5 is preferably positioned on the optionally preheated preheated contact heating assembly 1 and transfered to the surface 7. The object 5 can then be positioned on the surface 7 by moving the hand-held device together with the object 5 to the desired position on the surface 7 whereby object 5 is lightly pressed against the surface.

It was found that curing of thermosettable adhesives at temperatures above 160°C, in particular above 180°C and very specifically above 200°C requires a low water content of the thermosettable adhesive of less than 0.3% by weight, preferably of less than 0.1% by weight, more preferably of less than 0.05% by weight and especially preferably of less than 0.01% by weight.

In contrast to curing at lower temperatures the evaporation of water at temperatures higher than 160°C and in particular, higher than 200°C results in excessive bubbling and in a dramatic decrease of the bond area.

Objects 5 comprising a thermosettable adhesive layer 6 which can be transferred and applied to a surface 7 by means of a hand-held device, wherein the thermosettable adhesive layer exhibits a water content of less than 0.03% by weight, preferably of less than 0.1% by weight and more preferably of less than 0.01% by weight, are new and they are subject-matter of the present invention.

The articles comprising object 5 and a thermosettable adhesive layer 6, can be pre-dried, for example, in desiccators and stored under conditions preventing remoistening. It has been found, for example, that storing the articles for 2 weeks in an desiccator over dry silica and/or by applying a vacuum of 0.1 mbar for two hours with subsequent storage of the predried articles in small bags comprising thermally welded aluminum coated plastic foils, results in maintaining a desirable water content of less than 0.01% by weight for at least 6 months.

Alternatively, the articles can be dried during storage and taken from the storage device like, for example, an desiccator only just before applying them to a substrate 7. It has been found, for example, that articles comprising the circularly shaped anchoring devices of Fig. 4, and a thermosettable adhesive, can be advantageously stored in plastic or metal tubes which are closed with caps comprising a drying agent like, for example, dried silica. The articles can be filled into this tube-shaped storing device after having been pre-dried in an desiccator, for example, or they can be dried in the storing device during storage. In the latter case, the articles should be kept in the tube-shaped storing device for at least 2 weeks prior to use. It was found that objects 5 comprising the circularly shaped anchoring devices of Fig. 4 exhibit when being stored - either predried or non pre-dried - in the tube-shaped storage devices, a desirable water content of less than 0.01% by weight for at least 6 months.

Pressure-sensitive thermosettable adhesives having a water content of less than 0.1% by weight and more preferably of less than 0.01% by weight and the corresponding adhesive tapes are new, and they are subject matter of the present invention.

The object 5 comprising a thermosettable adhesive layer 6 with the required low water content is transferred to and positioned on the substrate 7.

In addition to heating, curing requires application of a suitable curing pressure which can be applied to the contact heating assembly 1, for example, by means of a spring or other means. The curing pressure which is defined as force/adhesive area preferably is between 0.005 - 1 N/mm², more preferably between 0.01 and 0.5 N/mm² and especially preferably between 0.03 and 0.3 N/mm². The term curing pressure means that the pressure is exerted in the initial heating phase and during part or all of the curing interval. Curing pressure is preferably applied during all of the initial heating phase and the curing interval but it is also sufficient in some cases if the curing pressure is applied only during the initial heating phase and a first part, for example, the first half, of the curing interval.

Applying of a suitable curing pressure is essential for obtaining a strong and reliable bond between the substrate 7 and the object 5. It was furthermore found that increasing the curing pressure results in reduction of the curing time. Curing pressures higher than 1 N/mm² are, however, often less advantageous because the softened adhesive may be squeezed out of the bond line and inner stresses may be generated in the cured adhesive.

The method according to the present invention for adhering an object 5 comprising a thermosettable adhesive layer 6 to a substrate 7 requires applying a sufficient amount of heat and pressure to the object as to cure thew thermosettable adhesive layer in a curing interval of 5 minutes or less at an essentially constant average temperature of the thermosettable adhesive layer (6) during the curing interval which preferably is between 160 and 330^{o}C.

For lower curing temperatures of between 160 and 185^{o}C, a higher curing pressure of preferably at least 0.1 N/mm², more preferably of at least 0.15 N/mm² and especially preferably of 0.175 N/mm² or more should be applied in order to obtain the required curing times of 5 minutes or less. For curing temperature higher than 185^{o}C lower curing pressures of 0.01 N/mm² or less can be used. The curing pressure for curing temperatures above 185^{o}C preferably is at least 0.01 N/mm², more preferably at least 0.025 N/mm² and especially preferably at least 0.05 N/mm² in order to obtain advantage on curing times.

Considering these general guidelines, the person skilled in the art can easily modify and optimize the curing temperature and the curing pressure to obtain the required curing times taking into account the properties of a specific thermosettable adhesive layer 6 and the specific materials and geometrical set-up of the contact heating assembly 1, the object 5 and the substrate 7 used.

Application of curing pressure furthermore supports removing of small air inclusions at the interface of thermosettable adhesive layer 6 and surface 7. The formation of air inclusions at the interface can be suppressed by using a wedge-type application mode, i.e. initially providing a small inclination angle of typically 10° or less between the surface of the substrate 7 and the object 5 which is then gradually decreased until the thermosettable adhesive layer 6 fully contacts the surface of the substrate 7.

Substrate 7 can comprise various materials such as, for example, glass, ceramic materials, wood, thermoplastics and thermosets. Materials with a high thermal conductivity like, for example, bulky metals are less suited whereas metal-coated materials like the substrate materials enumerated above, can be utilized. The thickness of the metal coating is preferably less than 0.5 and more preferably less than 0.1mm.

The objects 5 with the attached thermosettable adhesive layer 6 are preferably planarly shaped, and they are preferably attached to planar parts of the substrate. It is, however, also possible that the object 5 with the attached thermosettable adhesive exhibits, for example, a curved shape provided that the surface 7 exhibits a correspondingly shaped surface part to allow for snug fitting.

Thermosettable adhesives are often relatively insensitive against surface contaminations so that a pre-treatment of the surface prior to the application of the object bearing the thermosettable adhesive layer 6 may be omitted sometimes. It is, however, often advantageous to clean the surface, for example, with organic solvents like, for example, isopropylalcohol, acetone, methanol, freons or with water with subsequent drying of the substrate. The choice of a suitable surface treatment depends on the respective surface, and the person skilled in the art can easily select an applicable treatment.

It was found that objects 5 being adhered to a substrate 7 with a thermoset adhesive, can be removed from the substrate by contacting the object with a hand-held device according to the invention with the contact means 17 being held at a temperature of typically between 150 and 300°C for a time sufficient to soften the thermoset adhesive and then removing the object with a cleavage tool. The time required for softening the adhesive is typically between 5 and 15 seconds. It was surprisingly found that the adhesive can be removed without any permanent residue by means of a cleavage tool such as, for example, a screw driver. Residues of the adhesive on the substrate can be easily removed by a razor blade or similar devices without any damaging the surface of the substrate.

This method of removing objects adhered to a substrate with a thermoset adhesive, from this substrate, is new and subject matter of the present invention.

Fig. 1 shows a preferred embodiment of a hand-held device according to the invention. The contact heating assembly 1 comprises a thermocouple 3 and heating element 2. In the specific embodiment shown in Fig 2 and Fig. 3 the contact heating assembly is made from aluminum and has a cylindrically shaped body with a diameter of 19.0 mm and a height of 40 mm. The hot bar plate 17 mounted onto cylindrically shaped body 15. The hot bar plate has a thickness of 2 mm.

The heating element used in the specific embodiment of Fig. 2 and 3 is a cartridge heater with a heating power of 200W so that a heating density of 15 W/cm³ is provided in thecontact heating assembly 1.

The thermocouple is a Ni-Cr/Ni-Al (Type K) thermocouple and directly contacts the hot bar plate so that it is located closely to object 5 which will be placed on the hot bar plate 17.

The contact heating assembly 1 is mounted in heat-resistant bearings 9 to the housing 15. The bearings 9 can comprise, for example, polytetrafluorethylene or other high temperature resistant plastics or thermosets or ceramics. In the case of the specific embodiment shown in Fig. 2 and 3, DOTHERM 600M from DO-Therm, Heßlingsweg 65, D-44309 Dortmund was used for the bearings 9.

As indicated in Fig. 1, object 5 bearing the thermosettable adhesive layer 6 is placed on the surface 7. The housing 15 can then be moved in the direction of surface 7 until the adjustable distance holder 10 contacts the surface, thus exerting a defined pressure onto the object 5 and thermosettable layer 6 via spring 8.

The distance holders 10 are also shown in Fig. 2 and 3. The height of distance holders 10 could be varied in order to vary the pressure exerted onto object 5 and thermosettable adhesive layer 6.

The signal of thermocouple 3 is fed into the input side of amplifier 12. In the specific embodiment of Fig. 2 and 3 a temperature controller available from RS Components GmbH, Hessenring 13b, 64546 Mörfelden-Walldorf, Art. No. 348-144 was used which contains the amplifier 12, the temperature control 13 and the relay 11.

It is to be understood that Fig. 1 is schematic only illustrating the invention without limiting it. The following specific examples which are intended to further illustrate the invention, have been obtained using the specific embodiment of Fig 2 and 3.

### Example 1

Circularly shaped aluminum anchoring plates with a total outer diameter of 25 mm were used (Fig. 4). This anchoring device has a forwardly protruding nose carrying a circularly die-cut, thermosettable, pressure-sensitive, epoxy/acrylate adhesive commercially available from 3M Company, St. Paul, U.S.A., as tape #9245. The thickness of the adhesive tape was 0.5mm. The inner diameter of the anchoring device was 19 mm, the depth of the recess was 2.3 mm. The thickness of the aluminum metal in the recess part of the anchoring plates was 0.7 mm. The adhesive layer exhibited a thickness of 0.50 mm and a diameter of 20 mm. The articles comprising the anchoring plate adhered to it had been dried prior to use to exhibit a water content of less than 0.01% by weight with respect to the mass of the adhesive layer.

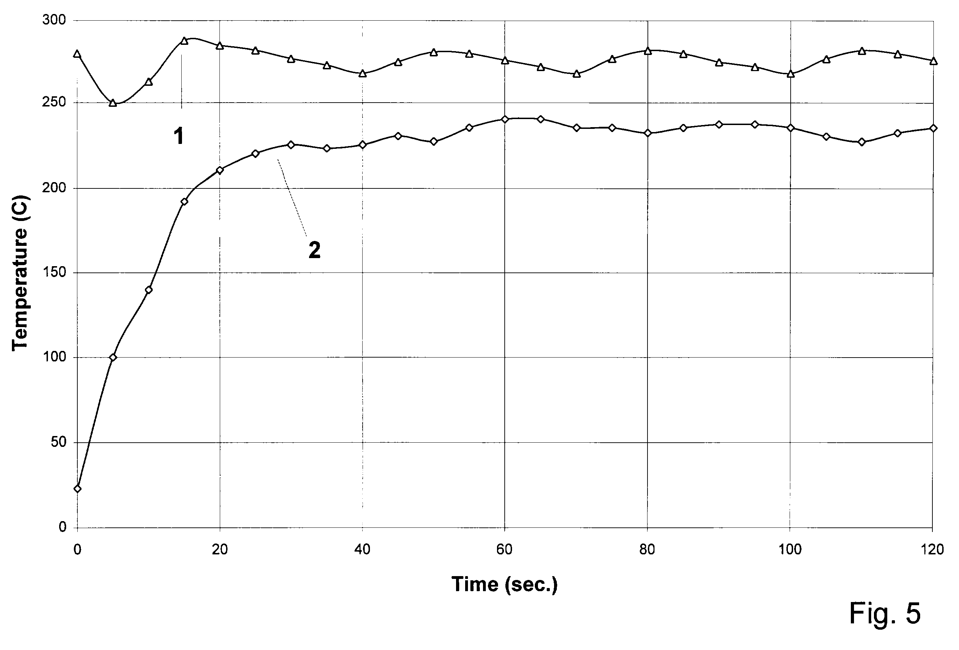

Fig. 5 shows temperature-time profiles recorded for these anchoring plates after being adhered to a glass substrate with a thickness of 6 mm. During curing, a pressure of 0.06 N/mm² was applied. Two temperature-time curves were recorded. 1 shows the temperature of the hot bar plate 17 and 2 gives the temperature of tape # 9245 which was recorded at the interface nose 18 of the Al plates/ tape # 9245 with a Ni-Cr/Ni-Al (Type K) thermocouple not shown in Fig. 1. It can be seen from 1 that the temperature of the hot bar plate 17 drops by about 25°C when contacted with the article but reaches its average working temperature again after about 30 sec. The temperature 2 of the adhesive layer is essentially constant during the curing interval.

**Table 1**

| Temperature range of thermosettable adhesive layer (°C) | Hot bar plate temperature range (°C) | Curing time (sec) |
|---|---|---|
| 169-180 | 205-219 | 360 |
| 189-194 | 227-236 | 270 |
| 211-219 | 250-263 | 150 |
| 224-232 | 267-281 | 120 |
| 251-256 | 280-304 | 90 |
| 273-283 | 304-320 | 90 |

The influence of the temperature of the hot bar plate 17 or the temperature of the thermosettable adhesive layer 6, respectively, on the curing time is shown in Table 1. The curing time was determined by the colour change of the thermosettable adhesive tape#9245 which shows a distinct change from black to grey colour if completely cured. The curing time was measured after more than 90% of the adhesive showed grey colour.

A hot bar plate temperature of 205 - 219°C corresponding to a temperature of the thermosettable adhesive layer of 169-180°C, does not provide the curing time required for a hand-held device when using a curing pressure of 0.06 N/mm² only.

### Example 2

The procedure of Example 1 was repeated with the exception that the average working temperature of the hot bar plate was kept constant at 274 °C which corresponds to an average working temperature of the thermosettable adhesive layer of 228°C, and that the glass substrate was replaced with the substrates listed in Table 2. The tile substrate was conventional white glazed ceramic as is commercially available from hardware stores and had a thickness of 7.4 mm. The wood substrate was a piece of beech wood with a thickness of 20 mm. The extruded PET substrate had a thickness of 10 mm and a natural colour. The Al substrate had a thickness of 2.2 mm. The curing times of the various substrates are summarized in Table 2. High speed curing on the Al substrate was not possible because the average working temperature of the thermosettable adhesive layer obtained did not allow for rapid curing times which are required for a hand-held device. The low average working temperature of the thermosettable adhesive layer on the Al substrate is due to the high thermal conductivity of the Al substrate.

**Table 2**

| Substrate | Average working temperature of thermosettable adhesive layer (°C) | Curing time (sec) |
|---|---|---|
| Tile | 228 | 90-120 |
| Wood | 238 | 30 |
| PET | 248 | 45 |
| Al | 140 | > 1200 |

### Example 3

The procedure of Example 1 was repeated with the exception that the average working temperature of the hot bar plate was kept constant at 274°C and that the thickness of the adhesive layer was chosen to be 0.25 mm. The average working temperature of the thermosettable adhesive layer was 239°C, and the curing time obtained was 90 sec.

### Example 4

The procedure of Example 1 was repeated with the exception that the average working temperature of the hot bar plate was kept constant at 274°C and that the curing pressure was varied as is indicated in Table 3.

**Table 3**

| Curing pressure (N/mm²) | Average working temperature of thermosettable adhesive layer (°C) | Curing time (sec) |
|---|---|---|
| 0.031 | 210 | 150 sec |
| 0.094 | 232 | 105 sec |
| 0.174 | 236 | 90 sec *) |

| | | |
|---|---|---|
| *) Obtained with an adhesive layer 12 mm in diameter | | |

### Example 5

The procedure of Example 1 was repeated with the exception that the adhesive layer was 12 mm in diameter, that the curing pressure was 0.26 N/mm² and that the curing conditions were varied as indicated in Table 4. The maximum cleavage force was measured by fixing the glass substrate in a clamp within a tensile tester. Another clamp was attached to the outer end of a cylindrically shaped test fixture, the other end of which was mounted to the anchoring plate on the glass substrate via appropriately shaped engagement means engaging with the circular rim 19 of the anchoring plate. The test fixture had a length of 50mm and an outer surrounding rim at its outer end for secure fastening to the clamp. The clamp was attached to the moving force transducer of the tensiler tester providing a method to apply a cleavage force onto the joint. A test speed of 1mm/min was used in order to break the joint. The curing temperature of 150°C did not provide the curing time required for a hand-held device.

**Table 4**

| Average working temperature of thermosettable adhesive layer(°C) | Curing time (sec) | Maximum cleavage force (N) |
|---|---|---|
| 175 | 120 | 215 |
| 191 | 105 | 212 |
| 215 | 90 | 181 |
| 228 | 75 | 200 |
| 253 | 60 | 75 |
| 278 | 45 | 87 |
| 150* | 3600 | 232 |

| | | |
|---|---|---|
| * ) cured in an oven | | |

## Claims

1. A hand-held device for adhering an object (5) having a thermosettable adhesive layer (6) to a substrate (7), said device comprising a contact heating assembly (1) with a contact means (17) which is adapted to allow for application of heat and pressure to the object (5) to effect curing of the thermosettable layer (6), a heating element (2) integrated into the contact heating assembly (1), a means (3) for measuring the temperature of the contact zone comprising the adhesive layer (6), the object (5) and the contact means (17), a means (8) for exerting pressure on the contact means (17), a control circuit (4) using the signal of the means (3) for measuring the temperature of the contact zone for controlling the power supplied to the heating element (2), whereby the contact heating assembly (1), the heating element (2), the means (3) for measuring the temperature of the contact zone and the control circuit (4) are selected and adjusted to each other to allow for an essentially constant average temperature of the thermosettable adhesive layer (6) during the curing interval.

2. A hand-held device according to claim 1 wherein the average temperature of the thermosettable adhesive layer (6) during the curing interval is between 160 and 330°C.

3. A hand-held device according to claims 1 or 2 wherein the temperature of the thermosettable adhesive layer (6) deviates from the average working temperature of the thermosettable adhesive layer (6) during the curing interval by not more than ± 120°C.

4. A hand-held device according to claims 1-3 wherein the temperature of the contact means (17) drops no more than about 20% below the average working temperature of the contact means during the curing interval when the object (5) bearing the thermosettable layer (6) is contacted with contact means (17).

5. A hand-held device according to claims 1-4 wherein the means (3) for measuring the temperature of the contact zone is a thermocouple which is integrated into the contact heating assembly.

6. A hand-held device according to claim 5 wherein the thermocouple is located closely to the inner surface of contact means (17).

7. A hand-held device according to claims 1-6 wherein the dimensions of the contact heating assembly (1) and the power output of the power supply (14) are adjusted to give a power density of between 4 and 30 W/cm³.

8. A hand-held device according to claims 1-7 wherein the pressure which is applied on the thermosettable adhesive layer (6) is between 0.005 and 1 N/mm².

9. A hand-held device according to claims 1-8 wherein the substrate (7) is selected from a group of materials comprising glass, ceramic materials, wood, thermoplastics, thermosets and metal-coated materials.

10. A hand-held device according to claims 1-9 wherein the object (5) is an anchoring device.

11. A hand-held device according to claim 10 wherein the anchoring device has a front surface bearing the thermosettable adhesive layer and a rear surface comprising engagement means to engage a cooperative feature of a holder.

12. A hand-held device according to any of claims 1-11 wherein the object (5) comprises a metal such as aluminum, steel, iron, brass, copper or zinc.

13. A hand-held device according to claims 1-12 wherein the thermosettable adhesive layer (6) has a water-content of less than 0.3% by weight.

14. A hand-held device according to any of claims 1-13 wherein the thermosettable adhesive layer (6) comprises a pressure-sensitive thermosettable adhesive.

15. Object comprising a thermosettable adhesive layer (6) which can be applied to a surface by means of the hand-held device of claims 1-14 wherein the thermosettable adhesive layer (6) exhibits a water-content of less than 0.3% by weight.

16. Kit of parts comprising a hand-held device according to claims 1-14 and an object according to claim 15.

17. Pressure-sensitive thermosettable adhesive layer exhibiting a water-content of less than 0.1% by weight.

18. Method for adhering an object (5) comprising a thermosettable adhesive layer (6) to a substrate (7), comprising positioning said object (5) on the substrate and contacting it with a hand-held device according to claims 1-14, applying heat and pressure to the object as to cure the thermosettable adhesive layer in a curing interval of 5 minutes or less at an essentially constant average temperature of the thermosettable adhesive layer (6) during the curing interval.

19. Method according to claim 18 wherein the average temperature of the thermosettable adhesive layer (6) during the curing interval is between 160 and 330⁰C.

20. Method according to any of claims 18 or 19 wherein the thermosettable adhesive layer (6) comprises a pressure-sensitive thermosettable adhesive, said method comprising positioning of the object on the substrate first and subsequently contacting it with the hand-held device.

21. Method of removing an object (5) being adhered to a substrate with a thermoset adhesive, from the substrate by contacting the object with the hand-held device according to claims 1-14 with the contact means (17) being held at an essentially constant average temperature of between 150 and 300^{o}C for a time sufficient to soften the thermoset adhesive and then removing the object with a cleavage tool.
